# EUROPEAN PATENT APPLICATION

(11) **EP 4 622 007 A1**
(43) Date of publication of application: **24.09.2025**
(21) Application number: 25164638.6
(22) Date of filing: 19.03.2025
(51) Int. Cl.: H01R 4/30, H05K 5/00, B82Y 30/00, F16B 41/00, H01R 4/34, H02B 1/00, H05K 7/00

(54) **ZERO RETORQUE BUS BARS**

(30) Priority: 19.03.2024 US 202463567386 P
(71) Applicant: Vertiv Corporation, Westerville, OH 43082 (US)
(72) Inventor: RATCLIFF, Gregory W., Delaware, OH, 43015 (US)
(74) Representative: Bryn-Jacobsen, Caelia

(57) **Abstract**

An electrical connector system can include a first conductor comprised of a first electrically conductive material, a second conductor comprised of the first electrically conductive material, a fastener configured to couple the first conductor to the second conductor, and a constant torque material comprised of a second electrically conductive material. The constant torque material can be disposed in electrical communication with the first conductor and the second conductor. The constant torque material can include carbon nanotubes disposed on a substrate.

## Description

### CROSS REFERENCE TO RELATED APPLICATIONS

This application claims the benefit of U.S. Provisional Patent Application No. 63/567,386 filed March 19, 2024. TECHNICAL FIELD

The present disclosure relates generally to computer and/or telecommunications equipment cabinets, such as those used in data centers, and more specifically relates to power distribution systems for such equipment cabinets.

### BACKGROUND

High-power copper busbars are commonly used in electrical power distribution systems to carry large currents and efficiently transfer electrical energy. One predominant method to connect to such busbars is to utilize bolted connections. The busbars are drilled to create holes at specific intervals, and bolts, nuts, and washers are used to fasten them together. Bolted connections offer good mechanical strength and can handle high currents.

Bolted bridge bars are also often used to connect to such busbars. Bridge bars are short sections of busbars that are used to bridge the gap between two busbars. They are typically bolted or welded onto the adjacent busbars, creating a continuous electrical path. Proper torquing and appropriate hardware are important to ensure reliable connections with both direct bolted connections as well as connections utilizing bridge bars.

Various factors contribute to the need to properly torque and periodically retorque bolted connections to busbars and joining busbars together. For example, when high power is applied to a copper bus, temperature changes can result in physical movement between the various substructures that are joined. Additionally, high current connections, particularly DC connections, can pulse due to magnetic fields when the power levels change, particularly during fault conditions where current changes are rapid. Physical systems may also be moved from time to time.

Periodically retorquing bolted connections increases maintenance costs and complexity. Periodically retorquing bolted connections also commonly requires system downtime, as power is commonly turned off during any retorquing procedures, and can therefore be disruptive to business operations, requiring planning and coordination. Without frequent periodic retorquing, bolted connections can become loose, resulting in a loss of conductivity. Such loss of conductivity can cause an increase in heat in such connections, thereby compounding the problem.

### SUMMARY

Applicant has created new and useful devices, systems and methods for power distribution systems for computer equipment cabinets. The use of a constant pressure material can ensure bolts installed to a torque specification stay within the specified torque range without requiring frequent periodic retorquing, thereby decreasing maintenance costs and complexity, as well as reducing system downtime. In at least one example, the constant pressure material can be permanently (or semi-permanently) elastic and can consistently spring back as a bolt expands and contracts, such as due to changes in heat which may be caused by changes in current flow, thereby eliminating (or at least greatly reducing) the need to retorque bolted connections. In at least one example, the constant pressure material can be conductive and can advantageously be arranged for supporting electrical communication between or among two or more conductors. In at least one example, the constant pressure material can be or include carbon nanotubes. In at least one example, the carbon nanotubes can be configured to provide a permanently (or at least long-lasting) elastic spring force or biasing force, such as for resisting backoff in bolted connections.

In at least one example, an electrical connector system can include two or more conductors, such as busbars, coupled together in electrical communication with one another and an electrically conductive constant torque material. In at least one example, two or more conductors can include or be made of one or more electrically conductive materials, which can be the same material(s) or different material(s) from one conductor to another. In at least one example, a fastener can be arranged for coupling two or more conductors together, and a constant torque material can be disposed in electrical communication with the conductors. In at least one example, the constant torque material can be or include an electrically conductive material and can be arranged for supporting electrical communication between or among two or more conductors, fasteners and/or other components.

In at least one example, the constant torque material can be disposed on a substrate, which can include being formed on the substrate, being formed elsewhere and transferred to the substrate, or any combination thereof In at least one example, the constant torque material can be or include carbon nanotubes. In at least one example, a plurality of carbon nanotubes can be aligned at least substantially perpendicular to a face or other surface of one or more conductors. In at least one example, the substrate can be coupled to at least a portion of a first conductor, such as to one or more faces or other surfaces thereof. In at least one example, the substrate can be coupled to at least a portion of a second conductor, such as to one or more faces or other surfaces thereof. In at least one example, two or more substrates comprising constant torque material can be coupled to any one or more of a plurality of conductors and/or to one another.

In at least one example, the constant torque material can resist movement of two or more conductors relative to one another and/or to one or more other system components, such as a fastener or component thereof. In at least one example, a fastener can include a bolt having a head portion and a shaft portion, a nut configured to be coupled to the shaft portion of the bolt, and at least one washer configured to be positioned along the shaft portion. In at least one example, one or more washers can be or include a Belleville washer and/or can be positioned between a portion of a fastener and a conductor. In at least one example, the constant torque material can be coupled to a portion of a fastener.

In at least one example, one or more conductors can be or include copper. In at least one example, a system can include two or more busbars and a constant torque material disposed on a substrate configured to be compressed between the busbars. In at least one example, the substrate can include one or more openings configured to receive at least a portion of one or more fasteners therein and/or there through. In at least one example, a constant torque material can be disposed in direct physical contact with two or more conductors.

In at least one example, an electrical connector, such as a wire or cable lug, can include a conductor connection section, which can be coupled to a conductor, and a surface connection section, which can be coupled to another connector such as a busbar, having a constant torque (or torque compensating) material applied thereto. In at least one example, the constant pressure material can be or include carbon nanotubes. In at least one example, the constant pressure material can be or include carbon nanotubes aligned perpendicularly with respect to a surface of the connector. In at least one example, the constant pressure material can be applied to a top and/or a bottom side of the connector. In at least one example, the constant pressure material can be applied to the conductor connection section and/or the surface connection section, which may be designed to couple with a busbar, such as by way of a bolted connection. In at least one example, the constant pressure material can be applied between the conductor connection section and the conductor.

In at least one example, the connector can include a busbar and/or a bolt coupling the surface connection section to the busbar. In at least one example, the constant pressure material can be applied between the surface connection section and the busbar. In at least one example, the constant pressure material can be applied to the busbar. In at least one example, the constant pressure material can be applied to a surface of the busbar opposite the connector.

In at least one example, the constant pressure material can be applied between the surface connection section and a face of the bolt. In at least one example, the constant pressure material can be applied to the face of the bolt. In at least one example, the constant pressure material can be applied to threads of the bolt. In at least one example, the connector can include a nut holding the connector between the bolt and the busbar. In at least one example, the constant pressure material can be applied to the nut.

In at least one example, the constant pressure material can be or include a coating on a surface of the connector. In at least one example, the constant pressure material can be disposed on a substrate and disposed adjacent to one or more surfaces of the connector. For example, a first substrate including the constant pressure material can be disposed adjacent to a top of the surface connection section, such as between the face of the bolt and the connector, and a second substrate including the constant pressure material can be disposed adjacent to a bottom of the surface connection section, such as between the connector and the busbar.

In at least one example, an electrical connector can be or include a busbar for coupling with a plurality of connectors, such as wire/cable lugs, and having a plurality of holes through the busbar for receiving a bolt to secure one of the lugs thereto, and a constant pressure material can be applied to the busbar. In at least one example, the constant pressure material can be or include carbon nanotubes, such as carbon nanotubes coupled to a substrate or transferred from a substrate onto a surface of the busbar . In at least one example, the constant pressure material can be or include carbon nanotubes aligned perpendicularly with respect to a surface of the busbar. In at least one example, the constant pressure material can be applied to a top side and a bottom side of the busbar.

In at least one example, the connector can include a bolt coupling the connector to the busbar. In at least one example, the constant pressure material can be applied between the connector and the busbar. In at least one example, the constant pressure material can be applied to the connector. In at least one example, the constant pressure material can be applied to a surface of the busbar opposite the connector.

In at least one example, the constant pressure material can be applied between the connector and a face of the bolt. In at least one example, the constant pressure material can be applied to the face of the bolt. In at least one example, the constant pressure material can be applied to threads of the bolt. In at least one example, the connector can include a nut holding the connector between the bolt and the busbar. In at least one example, the constant pressure material can be applied to the nut.

In at least one example, the constant pressure material can be or include a coating on a surface of the busbar. In at least one example, the constant pressure material can be or include one or more washers disposed adjacent to one or more surfaces of the busbar. For example, a first washer can be disposed adjacent to a top of the busbar, such as between a connector and the busbar, and second washer can be disposed adjacent to a bottom of the busbar, such as between a nut and the busbar.

In at least one example, an electrical connection block can include a conductive body, a hole in the body configured to receive a conductor therein, a clamping device configured to secure the conductor at least partially within the hole, a constant pressure material covering at least a portion of the clamping device, or any combination thereof. In at least one example, the constant pressure material can be or include carbon nanotubes. In at least one example, the constant pressure material can be or include carbon nanotubes aligned perpendicularly with respect to a surface of the clamping device and/or the body.

In at least one example, the clamping device can be or include a threaded fastener threaded into the block. In at least one example, the constant pressure material can cover at least a portion of the clamping device, such as the portion that engages the conductor, and/or the body. In at least one example, the constant pressure material can cover at least a portion of the threads of the clamping device. In at least one example, the constant pressure material can cover at least a portion of the hole. In at least one example, the constant pressure material can cover at least a portion a surface, such as an end of a threaded fastener, configured to engage the conductor.

In at least one example, the electrical connector can include a first conductor, a second conductor, a fastener, and a constant pressure material. In at least one example, the constant pressure material is in electrical contact with the first conductor and the second conductor. In at least one example, the constant pressure material is made of an electrically conductive material. In at least one example, the constant pressure material is applied to at least a portion of the first conductor and at least a portion of the second conductor. In at least one example, the constant pressure material is applied to at least a portion of the first conductor. In at least one example, the constant pressure material is applied to at least a portion of the second conductor.

### BRIEF DESCRIPTION OF THE DRAWINGS

FIG. 1 is a perspective view of one of many examples of an electrical connector according to the disclosure.
FIG. 2 is an elevation view of a nut and bolt assembly according to the disclosure.
FIG. 3 is a perspective view of one of many examples of an electrical connection according to the disclosure.
FIG. 4 is a perspective view of one of many examples of a busbar assembly according to the disclosure.
FIG. 5 is a perspective view of one of many examples of an electrical connection block according to the disclosure.
FIG. 6 is a microscopic view of a portion of one of many examples of an electrical connector according to the disclosure.
FIG. 7 is a side section view of one of many examples of an electrical connector, according to the present disclosure.
FIG. 8 is an exploded section view of one of many examples of an electrical connector, according to the present disclosure.
FIG. 9 is an exploded section view of one of many examples of an electrical connector, according to the present disclosure.
FIG. 10 is an exploded section view of one of many examples of an electrical connector, according to the present disclosure.
FIG. 11 is an exploded section view of one of many examples of an electrical connector, according to the present disclosure.

### DETAILED DESCRIPTION

The figures described above and the written description of specific structures and functions below are not presented to limit the scope of what Applicant has invented or the scope of the appended claims. Those skilled in the art will appreciate that not all features of a commercial example of the aspects are described or shown for the sake of clarity and understanding. Persons of skill in this art will also appreciate that the development of an actual commercial example incorporating aspects of the present aspects will require numerous implementation-specific decisions to achieve the developer's ultimate goal for the commercial example. Such implementation-specific decisions may include, and likely are not limited to, compliance with system-related, business-related, government-related and other constraints, which may vary by specific implementation, location and from time to time. While a developer's efforts might be complex and time-consuming in an absolute sense, such efforts would be, nevertheless, a routine undertaking for those of skill in this art having benefit of this disclosure. It must be understood that the aspects disclosed and taught herein are susceptible to numerous and various modifications and alternative forms.

The use of a singular term, such as, but not limited to, "a," is not intended as limiting of the number of items. Also, the use of relational terms, such as, but not limited to, "top," "bottom," "left," "right," "upper," "lower," "down," "up," "side," and the like are used in the written description for clarity in specific reference to the figures and are not intended to limit the scope of the aspects or the appended claims. The terms "including" and "such as" are illustrative and not limitative. The terms "couple," "coupled," "coupling," "coupler," and like terms are used broadly herein and can include any method or device for securing, binding, bonding, fastening, attaching, joining, inserting therein, forming thereon or therein, communicating, or otherwise associating, for example, mechanically, magnetically, electrically, chemically, operably, directly or indirectly with intermediate elements, one or more pieces of members together and can further include without limitation integrally forming one functional member with another in a unity fashion. The coupling can occur in any direction, including rotationally. Further, all parts and components of the disclosure that are capable of being physically embodied inherently include imaginary and real characteristics regardless of whether such characteristics are expressly described herein, including but not limited to characteristics such as axes, ends, inner and outer surfaces, interior spaces, tops, bottoms, sides, boundaries, dimensions (e.g., height, length, width, thickness), mass, weight, volume and density, among others.

Applicant has created new and useful devices, systems and methods for power distribution systems for computer equipment cabinets. The use of a constant pressure material, such as carbon nanotubes, can ensure bolts installed to a torque specification stay within the specified torque range without requiring periodic retorquing, thereby decreasing maintenance costs and complexity, as well as reducing system downtime. The use of a constant pressure material, such as carbon nanotubes, can eliminate (or at least greatly reduce) the loss of conductivity over a long period of time that would normally be expected of bolted connections and can advantageously support electrical communication between two or more components, such as busbars.

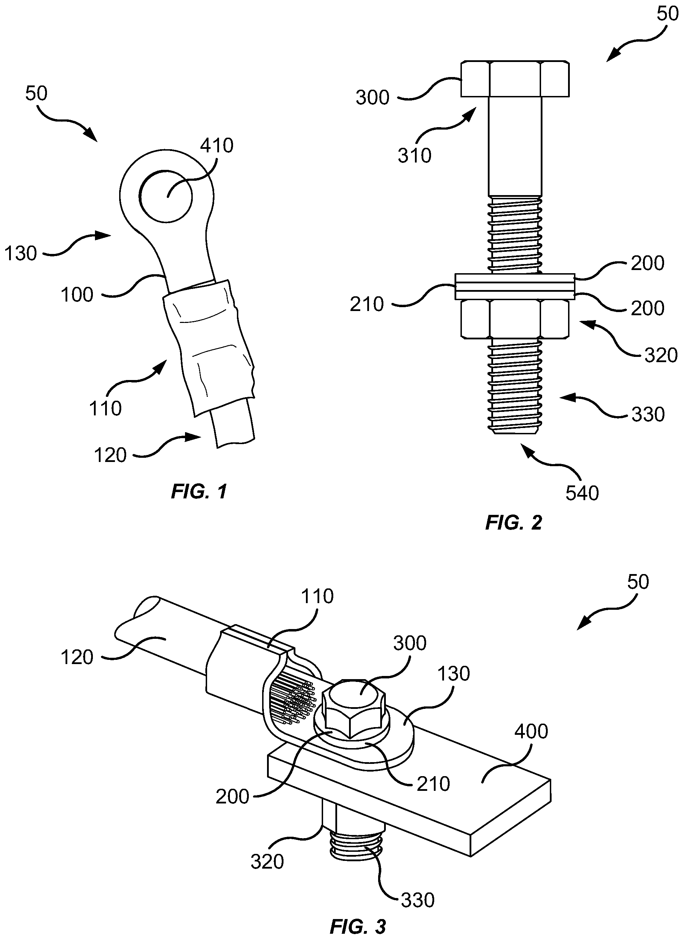

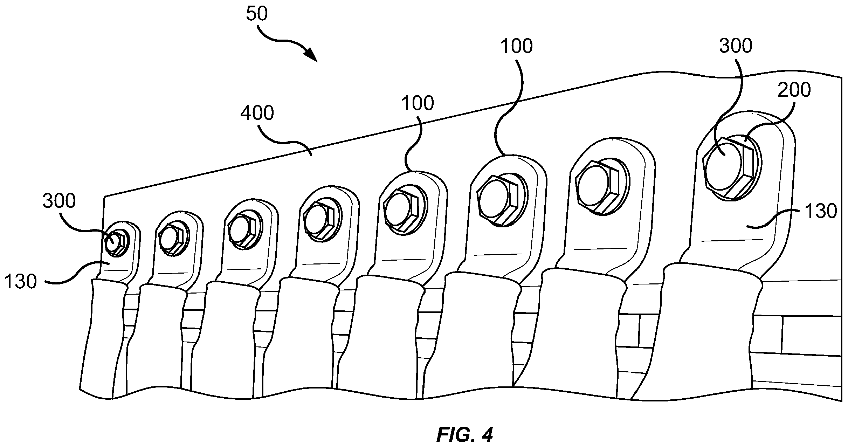

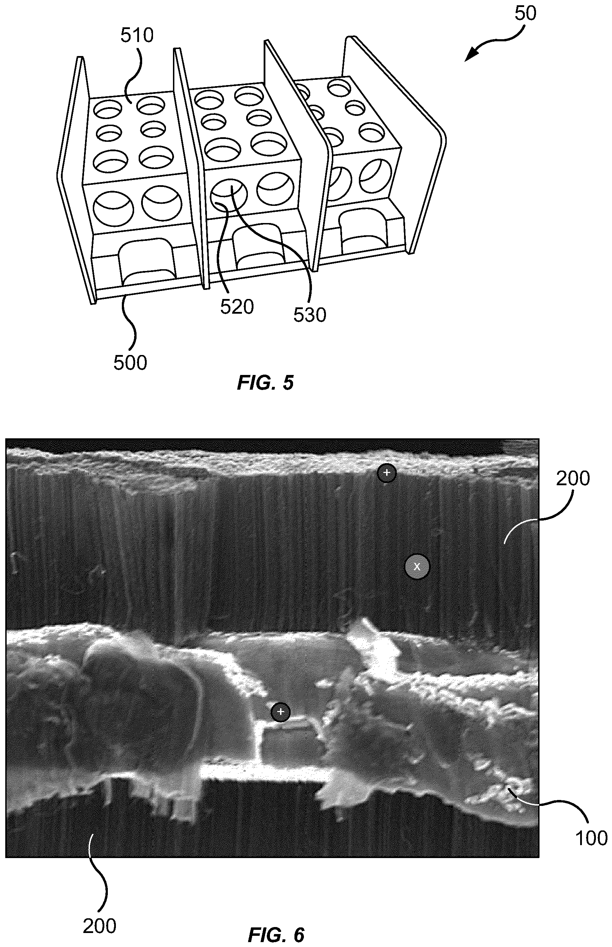

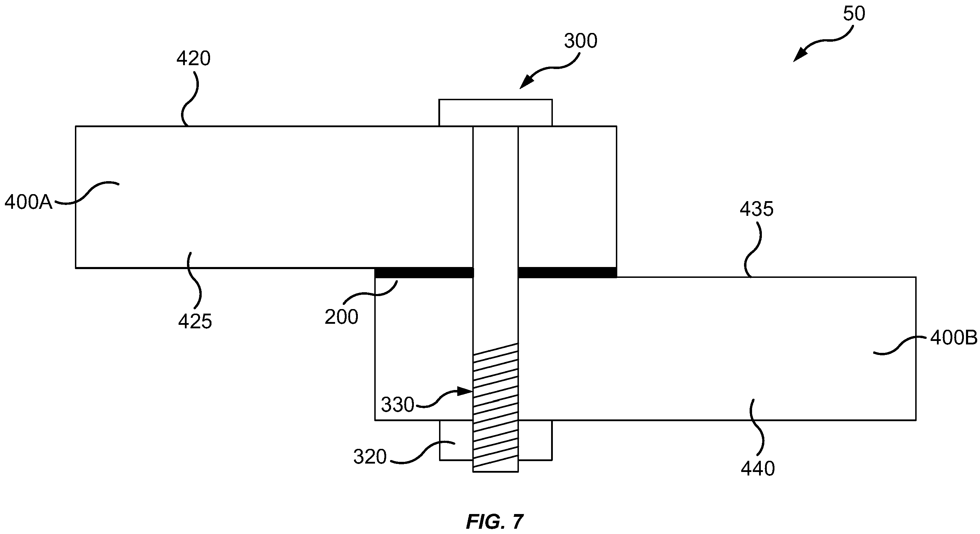

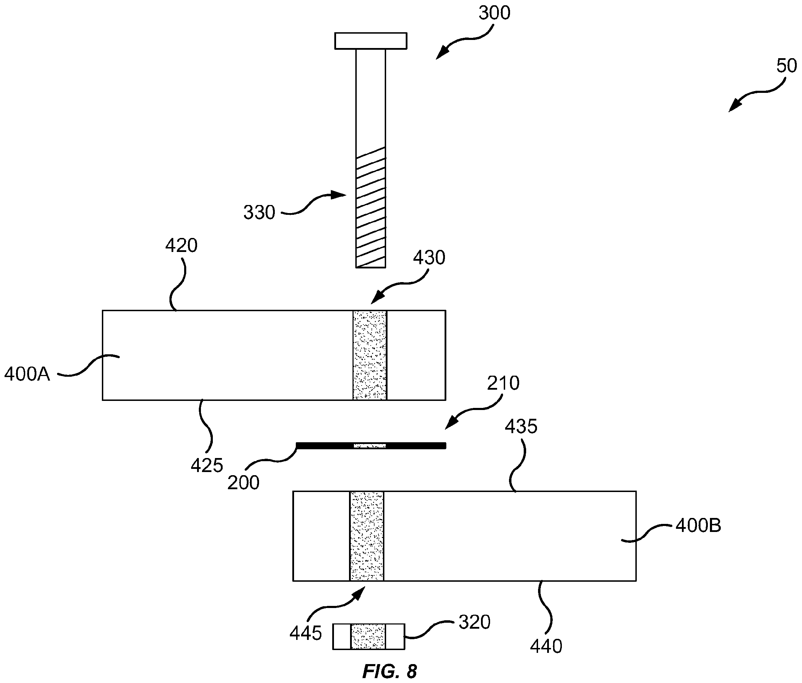

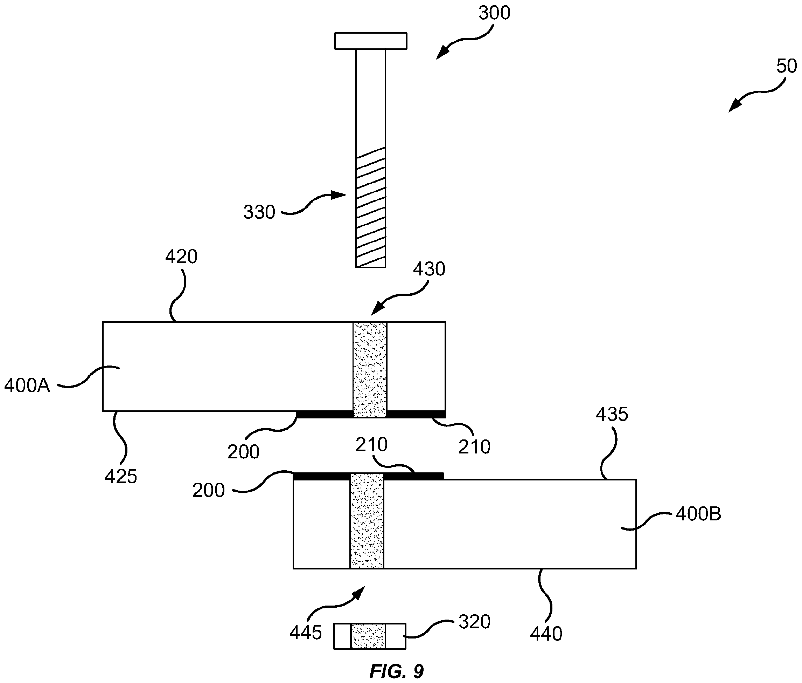

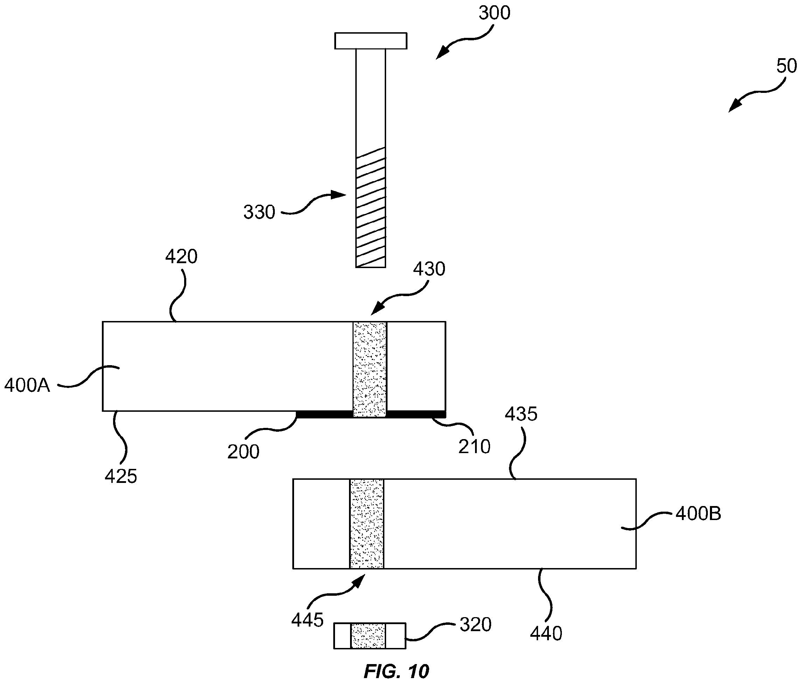

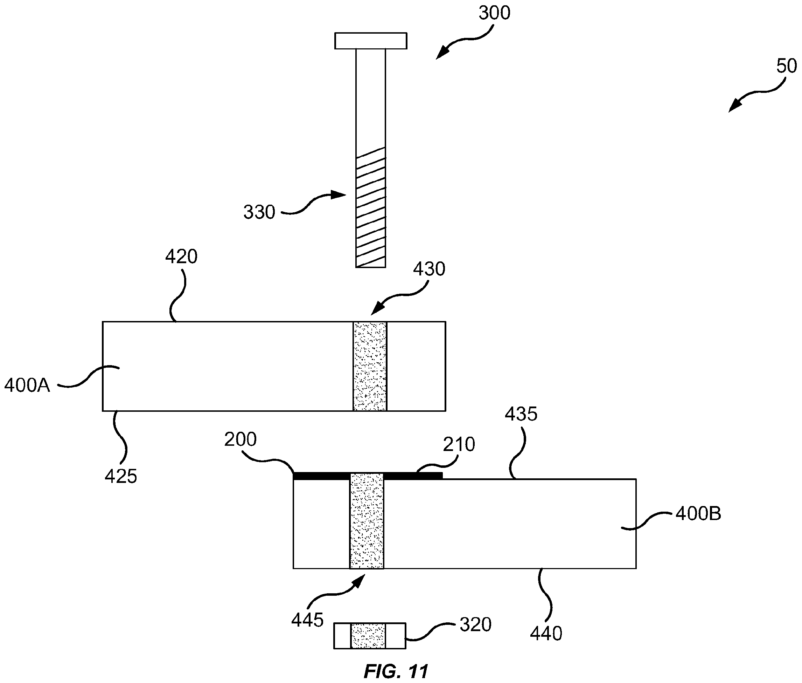

FIG. 1 is a perspective view of one of many examples of an electrical connector, according to the disclosure. FIG. 2 is an elevation view of a nut and bolt assembly, according to the disclosure. FIG. 3 is a perspective view of one of many examples of an electrical connection according to the disclosure. FIG. 4 is a perspective view of one of many examples of a busbar assembly, according to the disclosure. FIG. 5 is a perspective view of one of many examples of an electrical connection block, according to the disclosure. FIG.6 is a microscopic view of a portion of one of many examples of an electrical connector, according to the disclosure. FIG. 7 is a section view of one of many examples of an electrical connector, according to the disclosure. FIG. 8 is an exploded section view of one of the many examples of an electrical connector, according to the disclosure. FIG. 9 is an exploded section view of one of the many examples of an electrical connector, according to the disclosure. FIG. 10 is an exploded section view of the many examples of an electrical connector, according to the disclosure. FIG. 11 is an exploded section view of the many examples of an electrical connector, according to the disclosure. FIGS. 1-11 are described in conjunction with one another.

In at least one example, an electrical connector system 50 according to the disclosure can include one or more electrical connectors 100 and/or one or more other components for providing electrical connections. In at least one example, an electrical connector 100, such as a wire or cable lug, according to the disclosure can include one or more conductor connection sections 110, which can be crimped to a conductor 120, and one or more surface connection sections 130 having a constant pressure (or torque-compensating) material 200 applied thereto or otherwise disposed in contact therewith. In at least one example, the constant pressure material 200 can be or include carbon nanotubes. In at least one example, the constant pressure material 200 can be or include carbon nanotubes aligned perpendicularly (or at least substantially perpendicularly) with respect to one or more surfaces of the connector 100, such as a top surface, a bottom surface or another surface. In at least one example, the constant pressure material 200 can be or include carbon nanotubes aligned at another angle or angles relative to one or more surfaces of the connector 100, which can be or include any angle(s) sufficient to achieve one or more of the advantages or goals discussed herein in accordance with an implementation of the disclosure.

In at least one example, the constant pressure material 200 can be or include one or more coatings on or applied to a surface of the connector 100. For example, the constant pressure material 200 can include or be coupled to a substrate 210, and the constant pressure material 200 can be transferred to a surface of the connector 100 and/or the substrate 210 can be disposed in operable communication with the surface of the connector 100. In at least one example, the substrate 210 can be or include a sheet, plate, panel, disk, washer, or other structure having constant pressure material 200 propagated or otherwise disposed thereon, and one or more substrates 210 can be disposed adjacent to one or more surfaces of the connector 100. For example, a substrate 210 can be disposed adjacent to a top of the surface connection section 130, such as between a face 310 of a bolt 300 and the connector 100, a substrate 210 can be disposed adjacent to a bottom of the surface connection section 130, such as between the connector 100 and a busbar 400, a substrate 210 can be disposed adjacent to a bottom of the busbar 400, such as between the busbar 400 and a nut 320 holding the bolt 300 in place, or any combination thereof. As used herein, the term "bolt" can be or include any threaded fastener or similar coupler in accordance with an implementation of the disclosure (e.g., screws, threaded rods, etc.).

In at least one example, the constant pressure material 200 can be or include carbon nanotubes and the substrate 210 can be or include aluminum and/or any other material (whether now known or future developed) on or to which the carbon nanotubes can be grown, propagated or otherwise coupled. In at least one example, the constant pressure material 200 can be or include carbon nanotubes arranged to be transferred from a substrate 210 to one or more other system components, such as to one or more surfaces of a bolt, washer, nut, busbar, conductor, or other component. In at least one example, the constant pressure material 200 and/or the substrate 210 can be electrically conductive and can be advantageously arranged and disposed on, in contact with, or otherwise in cooperation with two or more other system components for supporting electrical communication between or among such components.

In at least one example, the constant pressure material 200 can dissipate heat, thereby minimizing any temperature changes and the resulting physical movement between connectors/connections 100, 400, 500. In at least one example, the constant pressure material 200 can flex and/or otherwise compensate for physical movement between connectors/connections 100, 400, 500, thereby maintaining a torque of a bolt 300 to within specifications during or despite any such movement (which specifications can be or include any specifications required or desired in accordance with an implementation of the disclosure).

In at least one example, the constant pressure material 200 can be applied to a top and/or a bottom side of the connector 100. In at least one example, the constant pressure material 200 can be applied to the conductor connection section 110 and/or the surface connection section 130, which may be designed to couple with a busbar 400, such as through a bolted connection. In at least one example, the constant pressure material 200 can be applied between the conductor connection section 110 and the conductor 120.

In at least one example, the connector system 50 can include one or more busbars 400 and/or one or more bolts 300 for coupling the surface connection section 130 of one or more electrical connectors 100 to the busbar 400. In at least one example, the constant pressure material 200 can be applied between the surface connection section 130 and the busbar 400. In at least one example, the constant pressure material 200 can be applied to the busbar 400. In at least one example, the constant pressure material 200 can be applied to a surface of the busbar 400 opposite the connector 100.

In at least one example, the constant pressure material 200 can be applied or otherwise disposed between the surface connection section 130 and a face 310 of the bolt 300. In at least one example, the constant pressure material 200 can be applied to or other disposed in contact with the face 310 of the bolt 300. In at least one example, the constant pressure material 200 can be applied to or other disposed in contact with threads 330 of the bolt 300. In at least one example, the connector system 50 can include a nut 320 for holding the connector 100 between the bolt 300 and the busbar 400. In at least one example, the constant pressure material 200 can be applied to or other disposed in contact with the nut 320.

In at least one example, the constant pressure material 200 can be or include a coating on a surface of the connector 100. In at least one example, the constant pressure material 200, such as a substrate 210 having constant pressure material disposed thereon, can be disposed adjacent to one or more surfaces of the connector 100. For example, a substrate 200 can be disposed adjacent to a top of the surface connection section 130, such as between the face 310 of the bolt 300 and the connector 100, a substrate 200 can be disposed adjacent to a bottom of the surface connection section 130, such as between the connector 100 and the busbar 400, a substrate 200 can be disposed adjacent to a bottom of the busbar 400, such as between the busbar 400 and a nut 320 holding the bolt 300 in place, or any combination thereof.

In at least one example, an electrical connector system 50 can be or include one or more busbars 400, which can couple with a plurality of other connectors 100, such as wire/cable lugs, having one or more of holes 410 there through for receiving a bolt 300 to secure connectors 100, 400 together and a constant pressure material 200 applied to the connectors 100, 400. In at least one example, the constant pressure material 200 can be or include carbon nanotubes. In at least one example, the constant pressure material 200 can be or include carbon nanotubes aligned perpendicularly with respect to one or more surfaces of the connectors 100, 400. In at least one example, the constant pressure material 200 can be applied to one or more sides of the connectors 100, 400, such as a top side, a bottom side and/or one or more other sides of the connectors 100, 400.

In at least one example, the busbar 400 can include one or more bolts 300 for coupling one or more other connectors 100 to the busbar 400. In at least one example, the constant pressure material 200 can be applied between the connector 100 and the busbar 400. In at least one example, the constant pressure material 200 can be applied to the connector 100 and/or to the busbar 400. In at least one example, the constant pressure material 200 can be applied to a surface of the busbar 400 opposite the connector 100.

In at least one example, the constant pressure material can be applied between the connectors 100, 400 and a face 310 of the bolt 300. In at least one example, the constant pressure material 200 can be applied to the face 310 of the bolt 300. In at least one example, the constant pressure material 200 can be applied to threads 330 of the bolt 300. In at least one example, the connectors 100, 400 can include a nut 320 holding the connector 100 between the bolt 300 and the busbar 400. In at least one example, the constant pressure material 200 can be applied to the nut 320.

In at least one example, the constant pressure material 200 can be or include a coating disposed on or in contact with a surface of the busbar 400. In at least one example, the constant pressure material 200 can be or include one or more washers, disks or other substrate 210 structures disposed adjacent to one or more surfaces of the busbar 400 and/or to one or more surfaces of corresponding coupling structure, such as a washer, bolt head, or the like. For example, constant pressure material 200 can be disposed adjacent to a top of the busbar 400, such as between a connector 100 and the busbar 400, and constant pressure material 200 can be disposed adjacent to a bottom of the busbar 400, such as between a nut 320 and the busbar 400.

In at least one example, the electrical connection system 50 can be or include one or more electrical connection blocks 500. In at least one example, an electrical connection block 500 can include a conductive body 510, a hole 520 in the body 510 configured to receive a conductor 120 therein, a clamping device 530 configured to secure the conductor 120 at least partially within the hole 520, a constant pressure material 200 covering at least a portion of the clamping device 530, or any combination thereof. In at least one example, the clamping device 530 can be or include one or more threaded fasteners, such as one or more bolts 300 or other fasteners. In at least one example, the constant pressure material 200 can be or include carbon nanotubes. In at least one example, the constant pressure material 200 can be or include carbon nanotubes aligned perpendicularly or at another angle(s) with respect to one or more surfaces of the clamping device 530 and/or the body 510.

In at least one example, the clamping device 530 can be or include a bolt 300 or other threaded fastener threaded into a portion of the block 500, such as the body 510. In at least one example, the constant pressure material 200 can cover at least a portion of the clamping device 530, such as the portion 540 that engages the conductor 120, and/or the body 510. In at least one example, the constant pressure material 200 can cover at least a portion of the threads 330 of the clamping device 530, 300. In at least one example, the constant pressure material 200 can cover at least a portion of the hole 520.

In at least one example, an electrical connector system can include two or more conductors, such as busbars, coupled together in electrical communication with one another and an electrically conductive constant torque material. In at least one example, two or more conductors can include or be made of one or more electrically conductive materials, which can be the same material(s) or different material(s) from one conductor to another. In at least one example, a fastener can be arranged for coupling two or more conductors together, and a constant torque material can be disposed in electrical communication with the conductors. In at least one example, the constant torque material can be or include an electrically conductive material and can be arranged for supporting electrical communication between or among two or more conductors, fasteners and/or other components.

In at least one example, the constant torque material can be disposed on a substrate, which can include being formed on the substrate, being formed elsewhere and transferred to the substrate, or any combination thereof In at least one example, the constant torque material can be or include carbon nanotubes. In at least one example, a plurality of carbon nanotubes can be aligned at least substantially perpendicular to a face or other surface of one or more conductors. In at least one example, the substrate can be coupled to at least a portion of a first conductor, such as to one or more faces or other surfaces thereof. In at least one example, the substrate can be coupled to at least a portion of a second conductor, such as to one or more faces or other surfaces thereof. In at least one example, two or more substrates comprising constant torque material can be coupled to any one or more of a plurality of conductors and/or to one another.

In at least one example, the constant torque material can resist movement of two or more conductors relative to one another and/or to one or more other system components, such as a fastener or component thereof. In at least one example, a fastener can include a bolt having a head portion and a shaft portion, a nut configured to be coupled to the shaft portion of the bolt, and at least one washer configured to be positioned along the shaft portion. In at least one example, one or more washers can be or include a Belleville washer and/or can be positioned between a portion of a fastener and a conductor. In at least one example, the constant torque material can be coupled to a portion of a fastener.

In at least one example, one or more conductors can be or include copper. In at least one example, a system can include two or more busbars and a constant torque material disposed on a substrate configured to be compressed between the busbars. In at least one example, the substrate can include one or more openings configured to receive at least a portion of one or more fasteners therein and/or there through. In at least one example, a constant torque material can be disposed in direct physical contact with two or more conductors.

In at least one example, an electrical connector system can be or include an electrical connector, such as a wire or cable lug. In at least one example, an electrical connector can include a conductor connection section, which can be coupled to a conductor, and a surface connection section, which can be coupled to another connector such as a busbar, having a constant torque (or torque compensating) material applied thereto. In at least one example, the constant pressure material can be or include carbon nanotubes. In at least one example, the constant pressure material can be or include carbon nanotubes aligned perpendicularly with respect to a surface of the connector. In at least one example, the constant pressure material can be applied to a top and/or a bottom side of the connector. In at least one example, the constant pressure material can be applied to the conductor connection section and/or the surface connection section, which may be designed to couple with a busbar, such as through a bolted connection. In at least one example, the constant pressure material can be applied between the conductor connection section and the conductor.

In at least one example, the connector system can include a busbar and/or a bolt coupling the surface connection section to the busbar. In at least one example, the constant pressure material can be applied between the surface connection section and the busbar. In at least one example, the constant pressure material can be applied to the busbar. In at least one example, the constant pressure material can be applied to a surface of the busbar opposite the connector.

In at least one example, the constant pressure material can be applied between the surface connection section and a face of the bolt. In at least one example, the constant pressure material can be applied to the face of the bolt. In at least one example, the constant pressure material can be applied to threads of the bolt. In at least one example, the connector can include a nut holding the connector between the bolt and the busbar. In at least one example, the constant pressure material can be applied to the nut.

In at least one example, the constant pressure material can be or include a coating on or applied to a surface of the connector. In at least one example, the constant pressure material can be or include one or more substrates disposed adjacent to one or more surfaces of the connector. For example, a first substrate can be disposed adjacent to a top of the surface connection section, such as between the face of the bolt and the connector, and a second substrate can be disposed adjacent to a bottom of the surface connection section, such as between the connector and the busbar.

In at least one example, an electrical connector system can be or include a busbar used to couple with a plurality of connectors, such as wire/cable lugs, and having a plurality of holes through the busbar, with each hole used to receive a bolt to secure one of the lugs thereto, and a constant pressure material applied to the busbar. In at least one example, the constant pressure material can be or include carbon nanotubes. In at least one example, the constant pressure material can be or include carbon nanotubes aligned perpendicularly with respect to a surface of the busbar. In at least one example, the constant pressure material can be applied to a top side and to a bottom side of the busbar.

In at least one example, the connector system can include a bolt coupling the connector to the busbar. In at least one example, the constant pressure material can be applied between the connector and the busbar. In at least one example, the constant pressure material can be applied to the connector. In at least one example, the constant pressure material can be applied to a surface of the busbar opposite the connector.

In at least one example, the constant pressure material can be applied between the connector and a face of the bolt. In at least one example, the constant pressure material can be applied to the face of the bolt. In at least one example, the constant pressure material can be applied to threads of the bolt. In at least one example, the connector can include a nut holding the connector between the bolt and the busbar. In at least one example, the constant pressure material can be applied to the nut.

In at least one example, the constant pressure material can be or include a substrate disposed in contact with a surface of the busbar. In at least one example, the substrate can be or include one or more washers disposed adjacent to one or more surfaces of the busbar and/or a separate substrate disposed between a surface of the busbar and one or more other structures, such as a washer or bolt head. For example, a first substrate can be disposed adjacent to a top of the busbar, such as between a connector and the busbar, and a second substrate can be disposed adjacent to a bottom of the busbar, such as between a nut and the busbar.

In at least one example, an electrical connection block can include a conductive body, a hole in the body configured to receive a conductor therein, a clamping device configured to secure the conductor at least partially within the hole, a constant pressure material covering at least a portion of the clamping device, or any combination thereof. In at least one example, the constant pressure material can be or include carbon nanotubes. In at least one example, the constant pressure material can be or include carbon nanotubes aligned perpendicularly with respect to a surface of the clamping device and/or the body.

In at least one example, the clamping device can be or include a threaded fastener threaded into the block. In at least one example, the constant pressure material can cover at least a portion of the clamping device, such as the portion that engages the conductor, and/or the body. In at least one example, the constant pressure material can cover at least a portion of the threads of the clamping device. In at least one example, the constant pressure material can cover at least a portion of the hole. In at least one example, the constant pressure material can cover at least a portion a surface, such as an end of a threaded fastener, configured to engage the conductor.

In at least one example, an electrical connector system 50 or electrical connector 100 can be or include a first busbar 400A, a second busbar 400B, a bolt 300, and a nut 320. In at least one example, the first busbar 400A includes a first top face 420, a first bottom face 425, and a first hole 430 extending from the first top face 420 to the first bottom face 425. In at least one example, a constant torque material 200 may be applied onto a substrate 210. In at least one example, the substrate 210, including the constant torque material 200, may be positioned between the first busbar 400A and the second busbar 400B. In at least one example, the substrate 210, including the constant torque material 200, can be coupled to at least a portion of the first top face 420. In at least one example, the substrate 210, including the constant torque material 200, can be coupled to at least a portion of the first bottom face 425. In at least one example, the substrate 210, including the constant torque material 200, can be coupled to at least a portion of the first top face 420, and another substrate 210, including the constant torque material 200, can be coupled to the first bottom face 425. In at least one example, the second busbar 400B includes a second top face 435, a first bottom face 440, and a second hole 445 extending from the second top face 435 to the second bottom face 440. In at least one example, the substrate 210, including the constant torque material 200, can be coupled to at least a portion of the second top face 435. In at least one example, the substrate 210, including the constant torque material 200, can be coupled to at least a portion of the second bottom face 440. In at least one example, the substrate 210, including the constant torque material 200, can be coupled to at least a portion of the second top face 435, and another substrate 210, including the constant torque material 200, can be coupled to the second bottom face 440.

In at least one example, at least a portion of the bolt 300 can be received in the first hole 430 of the first busbar 400A and the second hole 445 of the second busbar 400B. In at least one example, the bolt 300 includes a face 310 and a plurality of threads 330. In at least one example, the constant torque material 200 may be applied to at least a portion of the face 310 and at least a portion of the threads 330. In at least one example, the constant torque material 200 may be applied to at least a portion of the face 310 or at least a portion of the threads 330. In at least one example, the nut 320 can be torqued to a predetermined torque specification onto the threads 330 of the bolt 300. When the nut 320 is torqued onto the threads 330, the first busbar 400A and the second busbar 400B are pressed together, and the constant torque material 200 positioned between the first busbar 400A and the second busbar 400B is compressed. In at least one example, the constant torque material 200 may be applied to one or more sides of the nut 320.

In at least one example, the constant torque material 200 can be or include carbon nanotubes. In at least one example, the constant torque material 200 can be or include carbon nanotubes aligned perpendicularly or at another angle(s) with respect to the first top surface 420, the first bottom face 425, the second top face 435, and the second bottom face 440. In at least one example, the carbon nanotubes of the constant torque material 200 can be grown on the substrate 210. In at least one example, the constant torque material 200 can be or include an electrically conductive material that has substantially similar or greater electrical conductivity to the material of the first and second busbar 400A, 400B. In at least one example, the constant torque material 200 can dissipate heat, thereby minimizing any temperature changes and the resulting physical movement between the first and second busbars 400A, 400B. In at least one example, the constant torque material 200 can flex and/or otherwise compensate for physical movement between the first and second busbars 400A, 400B, thereby maintaining a torque of a bolt 300 to within specifications during or despite any such movement. In at least one example, the constant torque material 200 can be in electrical contact with the first busbar 400A and the second busbar 400B. In at least one example, the constant torque material 200 transmits an electrical current from the first busbar 400A to the second busbar 400B or vice versa.

Other and further examples utilizing one or more aspects of the disclosure can be devised without departing from the Applicant's disclosure. For example, the devices, systems and methods can be implemented for numerous different types and sizes in numerous different industries. Further, the various methods and examples of the devices, systems and methods can be included in combination with each other to produce variations of the disclosed methods and examples. Discussion of singular elements can include plural elements and vice versa. The order of steps can occur in a variety of sequences unless otherwise specifically limited. The various steps described herein can be combined with other steps, interlineated with the stated steps, and/or split into multiple steps. Similarly, elements have been described functionally and can be embodied as separate components or can be combined into components having multiple functions.
Further examples are set out in the clauses below:
1. An electrical connector system comprising:
   a first conductor comprised of a first electrically conductive material, the first conductor having a first top face and a first bottom face;
   a second conductor comprised of the first electrically conductive material, the second conductor having a second top face and a second bottom face;
   a fastener configured to couple the first conductor to the second conductor; and
   a constant torque material comprised of a second electrically conductive material;
   wherein the constant torque material is configured to be disposed in electrical communication with the first conductor and the second conductor.
2. The electrical connector system of clause 1, wherein the constant torque material is disposed on a substrate.
3. The electrical connector system of clause 1 or 2, wherein the second electrically conductive material comprises a plurality of carbon nanotubes.
4. The electric connector of clause 3, wherein the plurality of carbon nanotubes of the second conductive material are configured to be aligned substantially perpendicular to the first top face of the first conductor, the first bottom face of the first conductor, the second top face of the second conductor, and the second bottom face of the second conductor.
5. The electrical connector system of clause 2, wherein the substrate is configured to be coupled to at least a portion of the first conductor.
6. The electrical connector system of clause 2 or 5, wherein the substrate is configured to be coupled to at least a portion of the second conductor.
7. The electrical connector system of clause 2, 5, or 6 wherein the substrate is configured to be coupled to at least a portion of the first conductor, and further comprising a second substrate having an additional amount of the constant torque material disposed thereon, wherein the second substrate is configured to be coupled to at least a portion of the second conductor.
8. The electrical connector system of clause 2 or any one of 5-7, wherein the substrate is configured to be coupled to a portion of the first top face of the first conductor.
9. The electrical connector system of clause 2 or any one of 5-7, wherein the substrate is configured to be coupled to a portion of the first bottom face of the first conductor.
10. The electrical connector system of clause 2 or any one of 5-9, wherein the substrate is configured to be coupled to a portion of the second top face of the second conductor.
11. The electrical connector system of clause 2 or any one of 5-10, wherein the substrate is configured to be coupled to a portion of the second bottom face of the second conductor.
12. The electrical connector system of any one of the preceding clauses, wherein the constant torque material is configured to resist relative movement of the first and second conductors.
13. The electrical connector system of one of the preceding clauses, wherein the fastener includes:
   a bolt including a head portion and a shaft portion;
   a nut configured to be coupled to the shaft portion of the bolt; and
   at least one washer configured to be positioned along the shaft portion.
14. The electrical connector system of clause 13, wherein the at least one washer is a Belleville washer configured to be positioned between the nut and the second conductor.
15. The electrical connector system of one of the preceding clauses, wherein the constant torque material is coupled to a portion of the fastener.
16. The electrical connector system of one of the preceding clauses, wherein the first electrically conductive material is copper.
17. The electrical connector system of one of the preceding clauses, wherein the first and second conductors are busbars.
18. The electrical connector system of clause 17, wherein the constant torque material is disposed on a substrate configured to be compressed between the busbars.
19. The electrical connector system of clause 18, wherein the substrate comprises an opening configured to receive at least a portion of the fastener there through.
20. The electrical connector system of one of the preceding clauses, wherein at least a portion of the constant torque material is configured to be disposed in direct physical contact with both the first conductor and the second conductor.

The aspects have been described in the context of preferred and other examples and not every example of the aspects has been described. Obvious modifications and alterations to the described examples are available to those of ordinary skill in the art having the benefits of the present disclosure. The disclosed and undisclosed examples are not intended to limit or restrict the scope or applicability of the aspects conceived of by the Applicant, but rather, in conformity with the patent laws, Applicant intends to fully protect all such modifications and improvements that come within the scope or range of equivalents of the following clauses.

## Claims

1. An electrical connector system comprising:
a first conductor comprised of a first electrically conductive material, the first conductor having a first top face and a first bottom face;
a second conductor comprised of the first electrically conductive material, the second conductor having a second top face and a second bottom face;
a fastener configured to couple the first conductor to the second conductor; and
a constant torque material comprised of a second electrically conductive material;
wherein the constant torque material is configured to be disposed in electrical communication with the first conductor and the second conductor.

2. The electrical connector system of claim 1, wherein the constant torque material is disposed on a substrate.

3. The electrical connector system of claim 1 or 2, wherein the second electrically conductive material comprises a plurality of carbon nanotubes.

4. The electric connector of claim 3, wherein the plurality of carbon nanotubes of the second conductive material are configured to be aligned substantially perpendicular to the first top face of the first conductor, the first bottom face of the first conductor, the second top face of the second conductor, and the second bottom face of the second conductor.

5. The electrical connector system of claim 2, wherein the substrate is configured to be coupled to at least a portion of the first conductor.

6. The electrical connector system of claim 2 or 5, wherein the substrate is configured to be coupled to at least a portion of the second conductor.

7. The electrical connector system of claim 2, wherein the substrate is configured to be coupled to at least a portion of the first conductor, and further comprising a second substrate having an additional amount of the constant torque material disposed thereon, wherein the second substrate is configured to be coupled to at least a portion of the second conductor.

8. The electrical connector system of claim 2, wherein the substrate is configured to be coupled to a portion of the first top face of the first conductor; or optionally
wherein the substrate is configured to be coupled to a portion of the first bottom face of the first conductor; or optionally
wherein the substrate is configured to be coupled to a portion of the second top face of the second conductor; or optionally
wherein the substrate is configured to be coupled to a portion of the second bottom face of the second conductor.

9. The electrical connector system of any one of the preceding claims, wherein the constant torque material is configured to resist relative movement of the first and second conductors.

10. The electrical connector system of any one of the preceding claims, wherein the fastener includes:
a bolt including a head portion and a shaft portion;
a nut configured to be coupled to the shaft portion of the bolt; and
at least one washer configured to be positioned along the shaft portion; and optionally
wherein the at least one washer is a Belleville washer configured to be positioned between the nut and the second conductor.

11. The electrical connector system of any one of the preceding claims, wherein the constant torque material is coupled to a portion of the fastener; or optionally
wherein the first electrically conductive material is copper.

12. The electrical connector system of any one of the preceding claims, wherein the first and second conductors are busbars.

13. The electrical connector system of claim 12, wherein the constant torque material is disposed on a substrate configured to be compressed between the busbars.

14. The electrical connector system of claim 13, wherein the substrate comprises an opening configured to receive at least a portion of the fastener there through.

15. The electrical connector system of any one of the preceding claims, wherein at least a portion of the constant torque material is configured to be disposed in direct physical contact with both the first conductor and the second conductor.
